# EUROPÄISCHE PATENTSCHRIFT

(11) **EP 1 099 217 B1**
(45) Veröffentlichungstag und Bekanntmachung des Hinweises auf die Patenterteilung: **31.07.2002**
(21) Anmeldenummer: 99955674.9
(22) Anmeldetag: 08.09.1999
(51) Int. Cl.: G11B 5/00, H01F 10/00

(54) **ELEKTRISCHES FELD FÜR UMMAGNETISIERUNG EINES DÜNNEN FILMS**
ELECTRIC FIELD FOR MAGNETIC REVERSAL OF A THIN FILM
CHAMP ELECTRIQUE POUR L'INVERSION MAGNETIQUE D'UN FILM MINCE

(30) Priorität: 09.09.1998 DE 19841034
(43) Veröffentlichungstag der Anmeldung: 16.05.2001
(73) Patentinhaber: Forschungszentrum Jülich GmbH, 52425 Jülich (DE)
(72) Erfinder: BLÜGEL, Stefan, D-52074 Aachen (DE); NIE, Xiliang, Lab. 1617, Cole Blvd. Golden, CO 80401 (US)
(86) Internationale Anmeldenummer: DE9902840
(87) Internationale Veröffentlichungsnummer: WO0014732

(56) Entgegenhaltungen:
- WO-A-98/09274
- DE-A- 2 114 135
- DE-B- 1 285 002
- DE-C- 746 660
- US-A- 2 952 503
- US-A- 5 695 864
- PATENT ABSTRACTS OF JAPAN vol. 1997, no. 02, 28. Februar 1997 (1997-02-28) -& JP 08 255707 A (TOSHIBA CORP), 1. Oktober 1996 (1996-10-01) -& DATABASE WPI Section EI, Week 199649 Derwent Publications Ltd., London, GB; Class T03, AN 1996-495116 XP002131341
- PATENT ABSTRACTS OF JAPAN vol. 015, no. 515 (P-1293), 27. Dezember 1991 (1991-12-27) -& JP 03 224113 A (TOSOH CORP), 3. Oktober 1991 (1991-10-03)
- PATENT ABSTRACTS OF JAPAN vol. 016, no. 032 (P-1303), 27. Januar 1992 (1992-01-27) -& JP 03 241505 A (TOSOH CORP), 28. Oktober 1991 (1991-10-28)

## Beschreibung

Die Erfindung betrifft ein Verfahren zur Änderung einer Magnetisierungsrichtung eines dünnen Films sowie eine zugehörige Vorrichtung.

Es ist bekannt, auf einem Substrat dünne magnetische Filme oder Mehrfachschichten in einer Dicke von z.B. 1-20 Å z.B. durch Bedampfen aufzutragen. Das Material der Filme besteht z.B. aus Eisen, Kobalt oder Nickel. Durch Anlegen eines magnetischen Feldes wird der Film magnetisiert. Es bilden sich dann sogenannte orientierte magnetische Domänen aus. Die Ausrichtung einer Domäne kann für die Speicherung einer Information genutzt werden. Eine Änderung der Information erfolgt durch Änderung der Ausrichtung der Domäne. Die Änderung der Ausrichtung der Domäne wird im folgenden auch Ummagnetisierung genannt.

Es ist aus der Druckschrift "P. Hansen, Journal of Magnetism and Magnetic Materials, Vol. 83" bekannt, die Ausrichtung einer Domäne folgendermaßen vorzugeben oder zu ändern: Mit einem Laserstrahl wird der dünne Film erwärmt. Dann wird eine Magnetisierungsrichtung durch eine kleine Spule aufgeprägt. Das Material kühlt ab und die Information ist in Form eines Bits gespeichert.Das Verfahren wird bei sogenannten magnetooptischen Harddisks angewendet.

Das bekannte Verfahren weist den Nachteil auf, daß langsame thermische Aufwärm- und Abkühlprozesse erforderlich sind. Entsprechend langsam werden Informationen gespeichert.

Aufgabe der Erfindung ist die Schaffung eines Verfahrens sowie einer Vorrichtung, mit der schneller Informationen auf dünnen Filmen gespeichert werden können.

Die Aufgabe der Erfindung wird durch ein Verfahren mit den Merkmalen des Haupt- sowie durch eine Vorrichtung mit dem Merkmalen des Nebenanspruchs gelöst. Vorteilhafte Ausführungsformen der Erfindung ergeben sich aus den abhängigen Ansprüchen.

Anspruchsgemäß wird vor einer Aufprägung einer Magnetisierungsrichtung ein elektrisches Feld angelegt, das eine Feldkomponente senkrecht zur Oberfläche des Films aufweist. Durch Aufprägung einer Magnetisierungsrichtung kann eine bereits vorhandene Magnetisierungsrichtung geändert (ummagnetisiert) worden sein.

Durch Anlegen des elektrischen Feldes wird die Temperatur reduziert, die für die Änderung bzw. Aufprägung der Magnetisierungsrichtung einer Domäne erforderlich ist. Mit größer werdenen elektrischen Feld sinkt die für die Ummagnetisierung erforderliche Aufheizung des dünnen Films. Entsprechend verkürzen sich die Aufheiz- und Abkühlzeiten. Im Vergleich zum eingangs genannten Stand der Technik können Informationen schneller abgespeichert werden.

Statt die für die Ummagnetisierung erforderliche Temperatur zu erniedrigen, kann alternativ die für die Ummagnetisierung erforderliche magnetische Feldstärke verringert werden.

In einer vorteilhaften Ausgestaltung des Verfahrens beträgt die anspruchsgemäße senkrechte Komponente des elektrischen Feldes größenordnungsmäßig 0,01 V/Å. Bei vielen Filmmaterialien ist diese elektrische Feldstärke der senkrechten Komponente ausreichend, um auch ohne Aufheizen die Magnetisierungsrichtung ändern zu können. Ein Bit kann entsprechend schneller geschrieben bzw. gespeichert werden.

Als Material des dünnen Films ist Eisen zu bevorzugen. Geeignet sind ferner zum Beispiel Kobalt, Nickel oder Legierungen aus den genannten Metallen. Legierungen mit einigen seltenen Erdmetallen wie z.B. Gd oder Tb können ebenfalls eingesetzt werden. Der Film kann aus mehreren Schichten bestehen.

Das verfahrensgemäß angelegte elektrische Feld darf eine obere Grenze nicht überschreiten. Das Überschreiten der Obergrenze hat zum Beispiel die Beschädigung des dünnen Films zur Folge. Durch ein zu starkes elektrisches Feld können sich Atome von der Oberfläche eines Substrates mit einem darauf befindlichen dünnen Film ablösen. Ein Fachmann kann die materialabhängige Obergrenze durch einige wenige Versuche ermitteln.

In einer vorteilhaften Ausgestaltung der Erfindung wird ein elektrisches Feld ausschließlich senkrecht angelegt. So wird erreicht, daß elektrische Feldkomponenten parallel zum Film vermieden werden. Das elektrische Feld wird so aus energetischer Sicht optimal eingesetzt. Ferner kann bei parallelen elektrischen Feldkomponenten ein elektrischer Strom fließen, der unerwünscht sein kann.

In einer weiteren vorteilhaften Ausgestaltung der Erfindung beträgt der dünne Film 1-13 Atomlagen, wobei als Material insbesondere Eisen vorgesehen ist. Es wurde festgestellt, daß das erfindungsgemäße Verfahren auf 1-13 Atomlagen dicke Atomschichten anwendbar ist. Hieraus folgt jedoch nicht, daß dickere Filme nicht möglich sind.

Ein Film ist nicht mehr dünn im Sinne des Anspruchs, wenn die Lehre der Erfindung aufgrund zu großer Schichtdicke nicht mehr ausführbar ist.

In einer vorteilhaften Ausgestaltung des Verfahrens wird das elektrische Feld abgeschaltet, wenn nicht ummagnetisiert werden soll. Es wird so Energie eingespart. Auch wird die Stabilität der Magnetisierungsrichtung sichergestellt.

In einer weiteren vorteilhaften Ausgestaltung des Verfahrens wird ein Substrat verwendet, welches aus einem Isolator, so zum Beispiel aus einer Elektrokeramik besteht. An den Isolator wird eine Spannung angelegt und so an der Grenzfläche ein geeignetes inneres elektrisches Feld erzeugt. Durch Abschalten der Spannung wird das an der Grenzfläche geeignet anliegende innere elektrische Feld abgeschaltet.

Das Substrat kann selbsttragend sein und so die mechanische Stabilität des Aufbaus sicherstellen. Es kann als nicht selbsttragende dünne Schicht vorliegen. Ist das Substrat nicht selbsttragend, so ist es bevorzugt auf einem selbsttragenden Bauteil aufgebracht. Durch das Bauteil wird dann die mechanische Stabilität des Aufbaus gewährleistet.

Die Spannung kann wird mit Hilfe einer Spannungsquelle bereitgestellt werden. Die Spannungsquelle ist z. B. mit zwei Elektroden verbunden. Die Elektroden grenzen dann an das aus einem Isolator bestehende Substrat.

Ein geeigneter Isolator ist zum Beispiel die Elektrokeramik BaTiO₃. Das BaTiO₃-Substrat kann 30 nm und dünner sein.

SiO₂ oder Al₂O₃ sind weitere Beispiele für Materialien, aus denen das aus einem Isolator bestehende Material beschaffen sein kann.

Elektrokeramiken verfügen über ein eigenes inneres elektrisches Feld. Sie eignen sich daher in besonderer Weise zur Erzeugung eines an der Grenzfläche geeignet anliegenden inneren elektrischen Feldes.

Eine Vorrichtung zur Durchführung des Verfahrens weist ein Substrat mit einem dünnen metallischen Film auf. Das Metall ist so gewählt, daß es Magnetisierungsrichtungen im metallischen Film erzeugt und geändert werden können. Geeignet sind insbesondere die bereits genannten Metalle Co, Ni, Fe sowie die genannten Legierungen. Der Film kann aus mehreren Schichten bestehen. Die Schichten unterscheiden sich dann durch das Material, aus dem sie bestehen.

Es sind Mittel zum Anlegen eines senkrechten elektrischen Feldes relativ zur Oberfläche des Films vorgesehen. Die Mittel zum Anlegen eines senkrechten elektrischen Feldes umfassen zum Beispiel Elektroden. In einer einfachen Ausgestaltung der Erfindung stellt das Substrat zugleich die Elektrode dar.

Ferner weist die Vorrichtung Mittel wie zum Beispiel eine oder mehrere Spulen auf, mit denen das für die Ummagnetisierung benötigte magnetische Feld erzeugt werden kann.

In einer vorteilhaften Ausgestaltung der Vorrichtung ist ein Isolator als Substrat vorgesehen. Die Vorrichtung umfaßt Mittel zur Anlegung einer Spannung an den Isolator. Auf das Substrat ist der metallische Film aufgebracht.

Mit Hilfe des Isolator kann in der bereits genannten Weise das erfindungsgemäße elektrische Feld erzeugt werden.

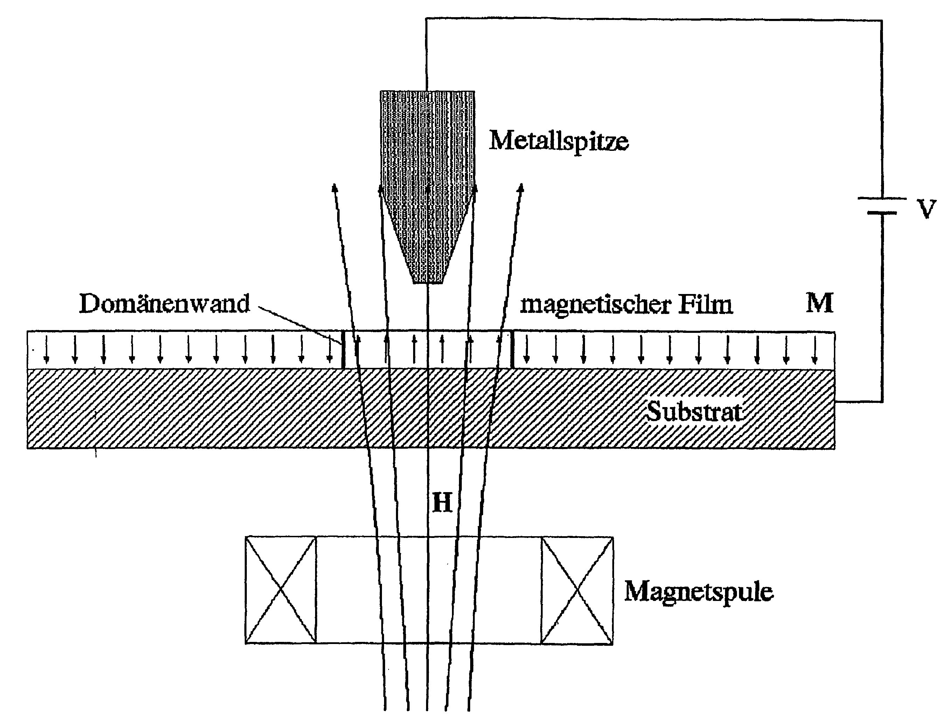

Die Figur zeigt eine Vorrichtung zur Aufprägung einer Magnetisierungsrichtung in einem dünnen Film

Auf einem aus Kupfer bestehenden (100)-Substrat (einkristallines Substrat) ist eine Eisenschicht aufgedampft. Die Eisenschicht bildet einen magnetischen Film. Sie ist eine Atomlage dick. Die Eisenschicht ist mit der Magnetisierung M magnetisiert. Die durch Pfeile dargestellte Magnetisierungsrichtung ist senkrecht zur Oberfläche des Films ausgerichtet.

Ein elektrisches Feld der Größenordnung 0,01 V/Å wird senkrecht zur Oberfläche des Films erzeugt. Als Elektroden, mit denen das elektrische Feld erzeugt wird, dient die Metallspitze sowie das Substrat. Anschließend oder gleichzeitig wird ein magnetisches Feld H mit Hilfe einer Spule erzeugt. Es wird Umschaltfeld genannt. Es steht senkrecht zur Oberfläche des Films. Es ist gemäß der zu erzeugenden Magnetisierungsrichtung der neuen magnetischen Domäne der neuen magnetischen Magnetisierungsrichtung ausgerichtet. Es wird mit Hilfe einer Spule erzeugt. Die Spule erzeugt ein magnetisches Feld der Größenordnung 30 kA/m (kilo-Ampere/Meter). Im Anschluß weist die betroffene Domäne im metallischen Film ggf. eine um 180° gedrehte Richtung auf, die als neue Darstellung der Information verwendet wird. Anschließend wird das elektrische Feld und danach das Umschaltfeld abgeschaltet. Die Einheit Metallspitze und Magnetspule wird relativ zum Film an einen Neuen Ort bewegt.

Die Magnetisierung liegt im allgemeinen entlang einer bevorzugten Kristallrichtung und/oder relativ zur relativ zur makroskopischen Form eines magnetischen Körpers. Diese Eigenschaft nennt man die magnetische Anisotropie. Die benötigte Energie, um die Magnetisierung von der Richtung minimaler Energie in die Richtung maximaler Energie zu drehen, wird Anisotropieenergie genannt. Die Anisotropieenergie ist eine Folge relativistischer Effekte, nämlich der Dipol-Dipol- und der Spin-Bahn-Wechselwirkung. In Einheiten des magnetischen Feldes ist die magnetische Anisotropie in der Größenordnung von 0.01 bis 10 MJ/m³. Bei dem vorgenannten Beispiel konnte die Anisotropieenergie durch Anlegen des genannten elektrischen Feldes praktisch auf Null reduziert werden.

Die erfindungsgemäße Lehre basiert auf der Modifikation des Spin-Bahn-Wechselwirkungsanteil der magnetischen Anisotropie durch ein elektrisches Feld. Der Spin-Bahn-Wechselwirkungsanteil der magnetischen Anisotropie ist besonders groß an Oberflächen und dominiert die magnetische Anisotropie im Falle dünner Filme. Statische elektrische Felder werden an Oberflächen von Metallen sehr effizient abgeschirmt. Dadurch treten elektrische Felder und die Spin-Bahn-Wechselwirkung in Wechselwirkung zueinander, was die Ursache der erfindungsgemäßen Wirkung ist. Die Spin-Bahn-Wechselwirkung bestimmt auch die magneto-optischen Eigenschaften, die magnetoresistiven Eigenschaften, den magnetischen Zirkulardichroismus und den extraordinären Halleffekt. Diese werden dann ebenfalls durch ein externes Feld direkt beeinflußt oder indirekt durch Änderung der Magnetisierungsrichtung.

## Patentansprüche

1. Verfahren zur Änderung einer Magnetisierungsrichtung eines dünnen Films,
mit den Schritten
- der dünne Film wird einem elektrischen Feld, das eine zur Filmoberfläche senkrechte Feldkomponente aufweist, ausgesetzt;
- gleichzeitig wird die Magnetisierungsrichtung des Films durch Anlegen eines zusätzlichen magnetischen Felds verändert.

2. Verfahren nach vorhergehendem Anspruch, bei dem die senkrechte Komponente des elektrischen Feldes größenordnungsmäßig 0,01 V/Å beträgt.

3. Verfahren nach einem der vorhergehenden Ansprüche, bei dem der dünne Film aus Eisen besteht.

4. Verfahren nach einem der vorhergehenden Ansprüche, bei dem das elektrische Feld abgeschaltet wird, wenn die Magnetisierungsrichtung durch Anlegen des Magnetfeldes im Film erzeugt worden ist.

5. Verfahren nach einem der vorhergehenden Ansprüche, bei dem der Film auf einem aus einem Isolator bestehenden Substrat aufgebracht ist.

6. Vorrichtung zur Änderung einer Magnetisierungsrichtung eines dünnen Films umfassend
- einen dünnen, magnetisierbaren Film,
- ein Mittel zur Erzeugung eines elektrischen Feldes, welches eine Feldkomponente senkrecht zur Oberfläche des Filmes aufweist, und
- ein Mittel zur Erzeugung eines zusätzlichen magnetischen Feldes, wobei die vorgenannten Mittel das elektrische und das magnetische Feld gleichzeitig zu erzeugen vermögen.

## Claims

1. Method for changing a direction of magnetization of a thin film,
with the following steps
the thin film is exposed to an electrical field which has a field component perpendicular to the film surface;
the direction of magnetization of the film is simultaneously changed by application of an additional magnetic field.

2. Method according to the preceding claim, in which the perpendicular component of the electrical field is of the order of 0.01 V/Å.

3. Method according to either of the preceding claims, in which the thin film consists of iron.

4. Method according to any one of the preceding claims, in which the electrical field is switched off when the direction of magnetization has been induced in the film by application of the magnetic field.

5. Method according to any one of the preceding claims, in which the film is applied to a substrate consisting of an insulator.

6. Apparatus for changing a direction of magnetization of a thin film comprising
a thin magnetizable film,
a means for generating an electrical field which has a field component perpendicular to the surface of the film, and
a means for generating an additional magnetic field, the aforementioned means being capable of generating the electrical and magnetic fields simultaneously.

## Revendications

1. Procédé de modification d'une direction de magnétisation d'un film mince,
comprenant les stades
- le film mince est soumis à un champ électrique qui a une composante de champ perpendiculaire à la surface du film;
- en même temps, la direction de magnétisation du film est modifiée par application d'un champ magnétique supplémentaire.

2. Procédé suivant la revendication précédente, dans lequel la composante perpendiculaire du champ électrique est de l'ordre de grandeur de 0,01 V/Å.

3. Procédé suivant l'une des revendications précédentes, dans lequel le film mince est en fer.

4. Procédé suivant l'une des revendications précédentes, dans lequel on met fin au champ électrique lorsque la direction de magnétisation a été obtenue dans le film par application du champ de l'aimant.

5. Procédé suivant l'une des revendications précédentes, dans lequel le film est déposé sur un substrat constitué d'un isolateur.

6. Dispositif de modification d'une magnétisation d'un film mince comprenant
- un film mince qui peut être magnétisé,
- un moyen de production d'un champ électrique qui a une composante de champ perpendiculaire à la surface du film, et
- un moyen de production d'un champ magnétique supplémentaire, lesdits moyens permettant de produire en même temps le champ électrique et le champ magnétique.
